# EUROPEAN PATENT SPECIFICATION

(11) **EP 4 162 166 B1**
(45) Date of publication and mention of the grant of the patent: **09.12.2026**
(21) Application number: 21734501.6
(22) Date of filing: 03.06.2021
(51) Int. Cl.: F16B 12/22, F16B 21/09

(54) **CONNECTING SYSTEM BETWEEN COMPONENTS OF A PIECE OF FURNITURE AND PIECE OF FURNITURE COMPRISING SAID SYSTEM**
VERBINDUNGSSYSTEM ZWISCHEN KOMPONENTEN EINES MÖBELS UND MÖBEL MIT DIESEM SYSTEM
SYSTÈME DE JONCTION ENTRE LES COMPOSANTS D'UN MEUBLE ET MEUBLE COMPRENANT LEDIT SYSTÈME

(30) Priority: 05.06.2020 IT 202000013438
(43) Date of publication of application: 12.04.2023
(73) Proprietor: Intelligent Fixings Limited, London EC1A 9ET (GB)
(72) Inventor: THOMSON, Brady Luke, London EC2Y 8NA (GB)
(74) Representative: Zermani Biondi Orsi, Umberto
(86) International application number: PCT/IB2021/054865
(87) International publication number: WO 2021/245591

(56) References cited:
- FR-A1- 3 017 169
- US-A- 5 087 106

## Description

The present invention relates to a connecting system between components of a piece of furniture and a piece of furniture comprising said system.

In the field of furniture production, and more generally of furnishing elements, the use of connecting devices to connect the different components of furniture and tighten them is known, both in correspondence with connecting angles between elements in the form of panels and in fixing crosspieces, shelves or other elements, in order to assemble the piece of furniture and/or equip it with specific accessories.

To date, two types of systems are mainly known: interlocking or expanding.

The interlocking systems are of particular interest for this discussion, which generally include the adoption of a first element, equipped with a slot, and a second component, equipped with a pin, such as to couple following the insertion and subsequent sliding of the pin in the slot.

The slot is usually shaped like a "lock" and provided with a wider insertion portion and a tightening portion, defining an undercut such as to retain the pin therein, avoiding the detachment between the components.

To date, however, such systems are little used and exploited on the market, as the connection they define is unreliable or hardly economical from a production point of view, requiring in most cases inserts for both the male and female components of the coupling.

Solutions also exist which include a direct coupling of the pin with the chipboard/core of the wooden component, which is previously milled so as to avoid the need to provide expensive and difficult to assemble inserts.

Examples of such systems can be found within numerous patent documents, such as US5087106A, DE8708112, US20140059829 and EP3212945.

All the documents listed above show fixing systems in which the female component of the coupling is obtained by a processing in the side of the panel such as to create an oblong slot equipped, along the development thereof, with at least one pair of sub-panels useful to retain a suitably shaped pin therein.

Unfortunately, in practice such systems are not progressive in the sliding of the pin inside the slot, making the movement difficult during assembly or causing, on the contrary, a poor seal of the coupling. In other words, the coupling tolerance in such systems is very limited, leading to inaccurate systems having tightening difficulties or loose couplings.

To overcome such a problem, document EP3212945 includes the presence of undulated pins, shaped so that in the tightening position each groove of the pin is coupled to a corresponding protrusion of the slot and vice versa.

By virtue of this multiplication of interlocks, the seal of the coupling is undoubtedly better, but still has substantial risks of reversal.

Precisely because of the possibility of decoupling between the two components, to date systems of this type find exclusive application in components which require at least two pin/slot couplings and which, preferably, also require the coupling of a third component adapted to prevent sliding in the release direction.

Typical application examples are precisely the side panels of a piece of furniture, in which the bottom (or top) walls are used as an abutment adapted to prevent decoupling.

This clearly significantly limits the spread of these connecting systems, reducing their appeal to furniture manufacturers and preventing their spread.

The object of the present invention is therefore to provide a connecting system for components of a piece of furniture and a piece of furniture which overcome the drawbacks related to the above-mentioned known art.

In particular, among the objects of the present invention is to provide a connecting system for components of a piece of furniture which does not require mounting tools and ensures a high seal.

A further object of the present invention is to provide a connecting system for components of a piece of furniture which is easy to assemble and disassemble.

Further, an object of the present invention is also to provide a connecting system for components of a highly versatile and secure piece of furniture, capable of finding application in a multitude of couplings.

Said objects are achieved by a connecting system between components of a piece of furniture having the features of one or more of the following claims 1 to 6, as well as by a piece of furniture having the features of claim 7.

In particular, said objects are achieved by a connecting system between components of a piece of furniture comprising a slot, made in one component of the piece of furniture, and a pin fixable or integrated with the other component and slidably insertable into the slot.

The pin has a base fixable or integrated to the first component of the piece of furniture, a stem departing from said base along an insertion direction (of the pin in the slot) and an enlarged portion having a width greater than said stem to define a shoulder facing said first component (i.e., facing said base). Preferably, the enlarged portion is defined by a head of the pin.

The slot is, as said, made in the second component of a piece of furniture.

Such a slot extends along a tightening direction transverse to the insertion direction and is sized to house inside the enlarged portion of the pin.

In particular, the slot has an insertion portion equipped with an enlarged insertion section such as to allow the introduction of the enlarged portion of the pin into the slot along the insertion direction.

The insertion portion is preferably of constant section, substantially corresponding to that of the enlarged portion of the pin.

The slot further comprises a retaining portion, provided with at least one abutment shoulder (preferably two) extending along said tightening direction and shaped to prevent the exit of the enlarged portion of the pin along the insertion direction.

In other words, the abutment shoulder defines an undercut inside the slot such as to abut the shoulder of the enlarged portion, preventing the exit thereof.

Therefore, the slot is preferably shaped as a keyhole slot and has:
- an "outer" portion with variable cross-section between an enlarged portion corresponding to the insertion portion and a narrow portion corresponding to the retaining portion
- an "inner", deeper portion having a substantially constant width and approximately corresponding to that of said enlarged portion of the pin.

In use, the pin is therefore insertable into the slot along said insertion direction, in correspondence with said insertion portion, and is movable inside the slot, along the tightening direction, towards a tightening position. More precisely, the pin can be inserted into the slot until it reaches an engaging position, from which it is slidable in the slot along the tightening direction.

According to an aspect of the present invention, the abutment shoulder comprises a sliding surface for shouldering the enlarged portion of the pin.

Preferably, the sliding surface has a guide section and a fixing section.

Preferably, the guide section is proximal (more preferably adjacent) to the slot insertion portion and defines an angle with both said insertion direction and said tightening direction.

The fixing section is instead distal to the insertion portion and is aligned with said tightening direction.

Preferably, therefore, the guide section is inclined with respect to both directions so as to define a tightening ramp which guides the pin into the slot easily, while the tightening section reduces its angle so as to favour the maintenance of the tightening position by the pin.

Preferably, the guide section of the sliding surface extends between a first end, proximal to said insertion portion, and a second end, distal from the insertion portion.

Preferably, the abutment shoulder has an increasing thickness between at least a first value, in correspondence with said first end of the guide section, and at least a second value, in correspondence with said second end of the guide section.

Preferably, moreover, the slot has a bottom wall arranged respectively at a first and a second distance from the first and the second end of the guide section, in which the first distance is greater than the second distance.

In other words, the height (i.e., distance between the sliding surface and the bottom wall) of the slot in the tightening portion is not constant, but tends to decrease in the guide section, facilitating movement from the engagement position to the tightening position and at the same time providing resistance to movement in the opposite direction.

Preferably, the guide section of the sliding surface forms an angle between 10° and 30°, preferably about 15°, with said bottom wall.

Preferably, said insertion direction and said tightening direction are orthogonal to one another.

It should be noted that the second component of the piece of furniture is preferably shaped like a wooden panel, more preferably with a structure in MDF, chipboard or veneered.

Advantageously, the slot is therefore made directly on the component of the piece of furniture, without requiring additional elements or hardware and for the benefit of the user.

According to the invention the system comprises an anti-sliding device configured to prevent the sliding of the pin inside the slot when in the tightening position.

According to the invention the anti-sliding device comprises a blocking element connected to said pin base and protruding next to said pin.

Said blocking element is shaped to engage in a hole (or in the slot insertion portion) of said second component when said pin is in the tightening position.

Advantageously, thereby, the stability of the connection is further strengthened, facilitating its use also in single-pin applications.

Typically, in fact, in the connection of two panels there are multiple pins and multiple corresponding slots, but in other systems (e.g., tube support) it is advantageous to have only one, which makes the solution described here particularly advantageous.

According to the invention the anti-sliding device has an elastically deformable bracket (or lip) which connects the base of the pin and the blocking element to each other.

More preferably, the elastically deformable bracket is configured to allow an oscillation of the blocking element, with respect to the pin, around an axis orthogonal to the insertion direction.

Advantageously, the elasticity of the bracket allows it to be inflected allowing the blocking element to slide on the second component of the piece of furniture (in particular on a flat face thereof) until it engages in the hole (or in the slot insertion portion) when the pin reaches the tightening position.

Preferably, the central axis of the pin is aligned with a central axis of the blocking element along the tightening direction.

It should be noted that, preferably, the slot defines therein a stroke of the pin along the tightening direction, corresponding to a distance between a central axis of the insertion portion and a central axis of the pin in the tightening position.

Preferably, the central axis of the pin is positioned at a distance from a central axis of the blocking element which is greater with respect to said stroke.

According to a first alternative, the hole is made in the second component of the piece of furniture is flanked by the slot.

More preferably, the hole is aligned with the slot along the tightening direction, in which said slot insertion portion is interposed between said sliding portion and said hole.

According to the invention the blocking element is defined by a tooth protruding from the bracket and provided with at least one abutment side orthogonal to the tightening direction in order to prevent the movement of the pin when engaged in said hole or in said slot insertion portion.

Advantageously, this results in a simple, cost-effective and safe connecting system.

An object of the present invention is also a piece of furniture, comprising a first and a second component, in which the second component (preferably a panel) has a flat face.

According to such an aspect of the invention, the piece of furniture comprises a connecting system between said first and said second component having one or more of the features described heretofore, in which the pin is fixed to said first component, the slot is made in said second component and the enlarged portion of the pin is placed in the slot in correspondence with the tightening position.

These and other features with the related advantages, will become more apparent from the following exemplary, therefore non-limiting, description of a preferred, therefore not exclusive, embodiment of a connecting system between components of a piece of furniture and a piece of furniture, as well as a method for processing a component of a piece of furniture and a method for manufacturing a connecting system between two components of a piece of furniture, as illustrated in the attached figures, in which:
- Figure 1 shows a view of a connecting system for components of a piece of furniture not according to the invention, with some parts of the piece of furniture transparent in order to highlight others;
- Figure 2 shows a first exploded perspective view of the system in figure 1;
- Figure 3 shows a second exploded perspective view of the system in figure 1
- Figure 4a shows a view of a connecting system for components of a piece of furniture not according to the invention, with some parts of the piece of furniture transparent in order to highlight others;
- Figure 4b shows an exploded perspective view of the system in figure 4a;
- Figure 5a shows a view of a connecting system for components of a piece of furniture not according to the invention, with some parts of the piece of furniture transparent in order to highlight others;
- Figure 5b shows an exploded perspective view of the system in figure 5a;
- Figures 6a-6c show an element of the connecting system in figure 1, respectively in plan, in longitudinal section according to the line VIb-VIb in figure 4a and in perspective;
- Figure 7 shows a sectional view of a second element of the connecting system in figure 1;
- Figures 8a and 8b show perspective views, respectively in a disassembled and assembled condition, of a connecting system for components of a piece of furniture according to according to the invention;

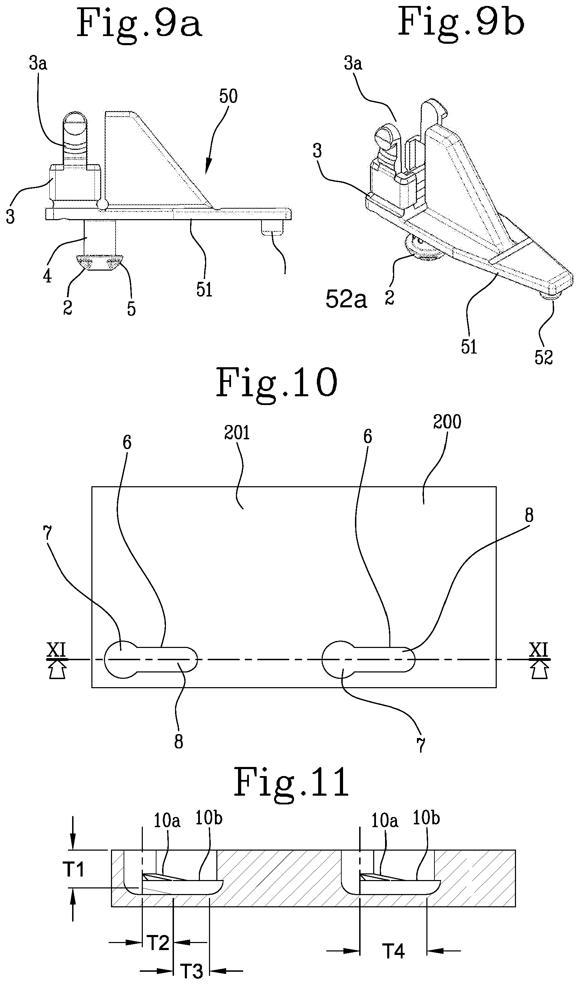

- Figures 9a and 9b show plan and perspective views, respectively, of an element of the connecting system of figures 8a and 8b;
- Figure 10 shows a component of a piece of furniture processed according to a processing method not according to the invention;
- Figure 11 shows a sectional view according to the section line XI-XI in figure 10;

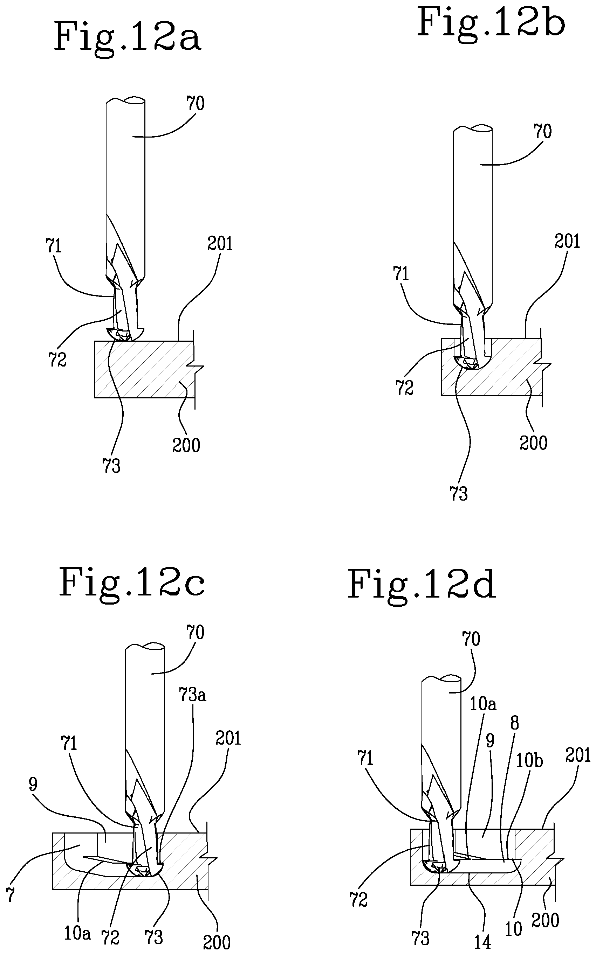

- Figures 12a-12d show successive processing steps of the processing method of a component of a piece of furniture not according to the invention.

With reference to the appended figures, number 1 indicates a connecting system for components of a piece of furniture not according to the invention.

In particular, the connecting system 1 is configured to connect a first 100, 150 and a second component 200 of a piece of furniture, where the term component is intended to define both structural elements (doors, panels, uprights, crosspieces) and accessory elements of the piece of furniture itself.

In particular, the first component can be defined by both a door or panel 100, possibly wooden, but also by another component such as a bar 150, a crosspiece, a cabinet, etc.

The second component 200 is preferably shaped like a wooden panel, preferably with a structure in MDF, chipboard or veneered.

The connecting system 1 comprises a pin 2 engageable in a slot 6 made in the second component 200 of the piece of furniture.

The pin 2 has a base 3 which is fixable or integrated to the first component 100, 150 of the piece of furniture, a stem 4 departing from said base along a main direction and an enlarged portion 5.

The enlarged portion 5 has a width (i.e., diameter) about 1/3 greater with respect to the stem 4.

The stem has a width (i.e., diameter) of about 8 mm and the enlarged portion has a width (i.e., diameter) of about 12 mm.

The base 3 is preferably engaged and fixed to the first component 100, 150 of the piece of furniture, more preferably reversibly.

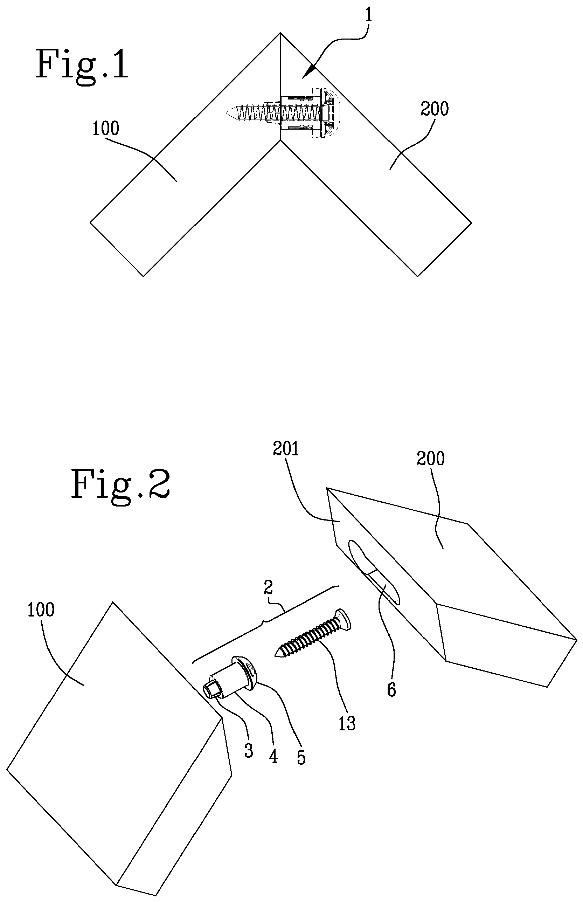

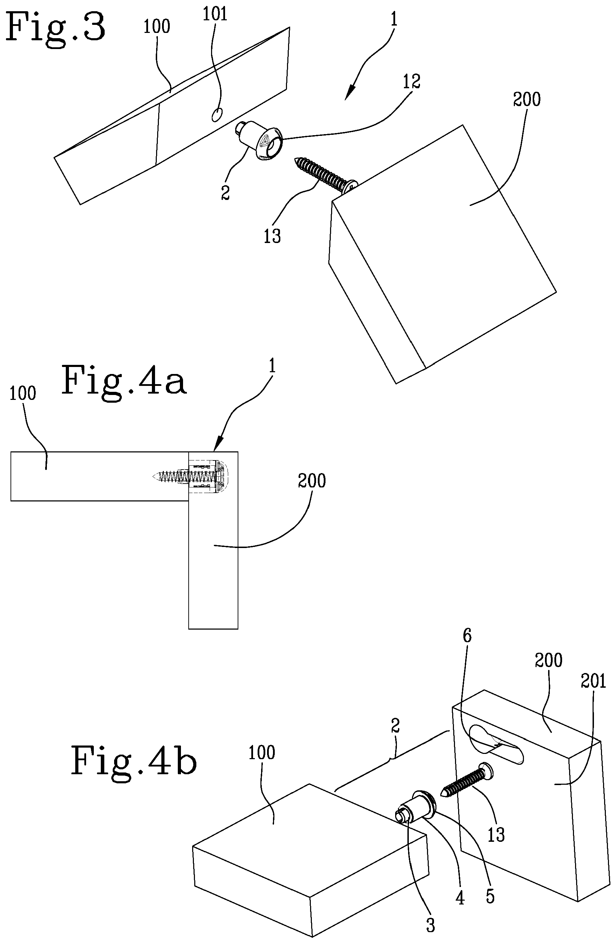

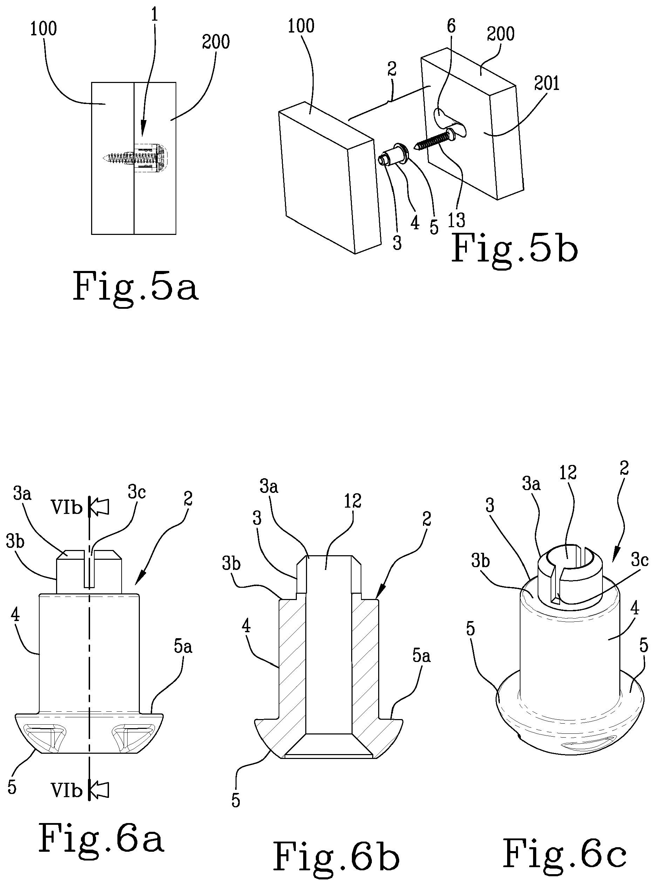

In the embodiments shown in figures 1-7, the base 3 preferably comprises an inlet portion 3a insertable into a corresponding seat 101 made in the first component 100.

The inlet portion 3a has a transverse dimension (i.e., section) which is smaller with respect to a body of the base 3.

In particular, the inlet portion 3a protrudes from the base body 3, defining an abutted surface 3b with a face of the first component 100.

In fact, the first component 100 has a flat face 100a on which a hole defining said seat 101 is made.

The pin 2 is positioned on the flat face 100a with the inlet portion 3a inserted into the seat 101 and the abutment surface 3b against the flat face 100a.

In the preferred embodiment, the inlet portion 3a has at least one longitudinal notch 3c which gives it a degree of elasticity such as to facilitate its insertion and maintenance in the seat 101.

Preferably, in order to increase the seal of the connection between the pin 2 and the first component 100, a screw 12 (or other threaded element) is provided which crosses the pin 2 along said insertion direction "A" between the enlarged portion 5 and the inlet portion 3a.

Therefore, the pin 2 has a longitudinal through cavity 13 which houses the screw 12 and allows it to be anchored to a bottom wall of the seat 101.

Preferably, moreover, the enlarged portion 5 has a width greater than that of the stem 4 and defines a shoulder 5a facing the first component 100, in particular the flat face 100a of the first component 100.

Thus, the flat face 100a and the shoulder 5a are separated from each other by the stem 4.

Advantageously, the shoulder 5a defines with the flat face 100a of the first component 100 an undercut useful for anchoring the pin 2 in the slot 6, as will be further clarified in the following.

In the preferred embodiment, the shoulder 5a develops orthogonally to the main direction; more preferably, said shoulder 5a lies in a (geometric) plane parallel to the flat face 100a of the first component 100.

It should be noted that the pin 2 develops along such a main direction which, in use, corresponds to an insertion direction "A" of the pin 2 in the slot 6.

The slot 6 is, as said, made in the second component 200 of the piece of furniture.

Preferably, such a slot 6 is made by drilling a flat face 201 of the second component, preferably by means of special milling tools.

The slot extends along a tightening direction "B" transverse to said insertion direction "A" and is sized to house inside the enlarged portion 5 of the pin 2.

Preferably, the insertion direction "A" and the tightening direction "B" are orthogonal to each other.

Moreover, in the preferred embodiment, the insertion direction "A" is orthogonal to the flat face 201 of the second component 200.

Still preferably, the tightening direction "B" is parallel to the flat face 201 of the second component 200

In the preferred embodiment, the slot 6 has an insertion portion 7 and a retaining portion 8 arranged in succession along the tightening direction "B".

The insertion portion 7 is provided with an enlarged insertion section such as to allow the introduction of the enlarged portion 5 of the pin 2 into the slot 6 along the insertion direction "A".

The retaining portion 8, on the other hand, is provided with at least one abutment shoulder 9 (preferably two) extending along the tightening direction "B" and shaped to prevent the exit of the enlarged portion 5 along the insertion direction "A".

Preferably, there are two abutment shoulders 9 of the slot 6, arranged on the sides thereof and, preferably, facing each other and parallel.

The pin 2 is therefore insertable inserted inside the slot 6 along said insertion direction "A" in correspondence with the insertion portion 7 and, once inserted, is movable inside the slot 6, along the tightening direction "B" up to a tightening position.

Therefore, during assembly, the pin 2 is inserted inside the slot 6 along said insertion direction "A" in correspondence with the insertion portion 7 and subsequently translated inside the slot 6 in the tightening direction "B" until it reaches a tightening position. It should be noted in this regard that what counts is the establishment of a relative movement between the pin 2 and the slot 6 in the tightening direction "B", whether it is obtained by moving the pin 2 only, the slot 6 only (i.e., the second component 200) or both.

Therefore, with the system assembled, the enlarged portion 5 of the pin 2 is placed in the slot 6 in correspondence with the tightening position.

The slot 6 therefore has a substantially keyhole slot shape, such as to allow the insertion of the pin 2 in a predetermined first position (i.e., aligned with the insertion direction "A") and to prevent the exit thereof along the insertion direction "A" in one or more second positions (e.g., tightening position).

In other words, the slot 6 has:
- an "outer" portion with variable cross-section between an enlarged portion corresponding to the insertion portion and a narrow portion corresponding to the retaining portion
- an "inner", deeper portion having a substantially constant width and approximately corresponding to that of said enlarged portion of the pin.

Preferably, the "inner" portion has a width (i.e., a dimension orthogonal to both the insertion "A" and tightening "B" directions) which is substantially constant and corresponds to the width (or the diameter of the enlarged portion 5 of the pin 2).

The "outer" portion has a first section, in correspondence with the insertion portion 7, having a width (preferably diameter) substantially corresponding to that of the enlarged portion 5 of the pin 2 and a second section, in correspondence with the retaining portion 8, having a width substantially corresponding to that of the stem 4 of the pin 2.

Not according to the invention, the abutment shoulder 9 comprises a sliding surface 10 adapted to allow the sliding (or slipping) of the shoulder 5a of the enlarged portion 5 of the pin 2.

The sliding surface 10 preferably has a guide section 10a and a fixing section 10b arranged in succession along the tightening direction "B".

Thus, such a sliding surface 10 substantially defines an interface between the "outer" portion and the "inner" portion of the slot in correspondence with the retaining portion.

Advantageously, this allows to progressively tighten the pin 2 inside the guide section 10a, significantly increasing the coupling tolerance of the system 1.

Preferably, the guide section 10a is proximal to the insertion portion 7 of the slot 6 and defines an angle with both the insertion direction "A" and the tightening direction "B".

The fixing section 10b, on the other hand, is distal to the insertion portion 7 and substantially aligned with said tightening direction "B".

Thus, with reference to the tightening direction "B", the guide section 10a is interposed between the insertion portion 7 and the fixing section 10b.

Advantageously, thereby, the guide section 10a makes the passage from the insertion direction "A" to the tightening direction "B" fluid and progressive.

More precisely, the guide section 10a of the sliding surface 10 extends between a first end 11a, proximal to said insertion portion 7, and a second end 11b, distal from the insertion portion 7.

Preferably, therefore, the first end 11a is located in correspondence with (next to) the insertion portion 7, while the second end 11b is located near or in any case close to the fixing section 10b.

Preferably, the abutment shoulder 9 (i.e., each abutment shoulder 9) has an increasing thickness between a first value, in correspondence with said first end 11a of the guide section 10a, and a second value, in correspondence with said second end 11b of the guide section 10a.

It should be noted that the term "thickness" is intended to define the dimension from the abutment shoulder 9 evaluated as the distance between the flat face 201 of the component 200 and the sliding surface 10 along the insertion direction "A".

Advantageously, therefore, the guide section 10a is defined by a ramp descending inside the slot 6 and followed by the enlarged portion of the pin 2 during the sliding along the tightening direction "B".

Preferably, the guide section 10a of the sliding surface 10 forms an angle between 10° and 30°, preferably about 15°, with said bottom wall 14.

The slot 6 also has a bottom wall 14 extending along the tightening direction "B", preferably along the entire development of the slot 6 itself.

It should be noted that the sliding surface 10 of each abutment shoulder 9 faces the bottom wall 14.

Preferably, said bottom wall 14 is arranged at a first and a second distance from the first 11a and the second end 11b of the guide section 10a, respectively, in which the first distance is greater than said second distance.

Advantageously, in correspondence with the guide section 10a, the bottom wall 14 does not follow the trend of the guide section 10a itself, but has a different orientation which allows the slot 6 to define an increased space near the insertion portion 7 which, during disassembly, facilitates the extraction of the pin 2.

In correspondence with the fixing section 10b, on the other hand, the abutment shoulder 9 (i.e., the shoulders) has a substantially constant thickness, preferably corresponding (or counter-shaped) to the length of the stem 4 of the pin 2 along the main direction thereof (i.e., along the insertion direction "A").

Advantageously, thereby, the sealing of the coupling is ensured and, by virtue of the absence of inclined surfaces in correspondence with the tightening position of the pin 2, there is no risk of accidental retroversion.

According to the invention the connection system comprises an anti-sliding device 50 configured to prevent the sliding of the pin 2 inside the slot 6 when in the tightening position.

According to the invention the system has an additional element with respect to the mere conformation of the slot 6 (and of the pin 2) which ensures the seal of the coupling.

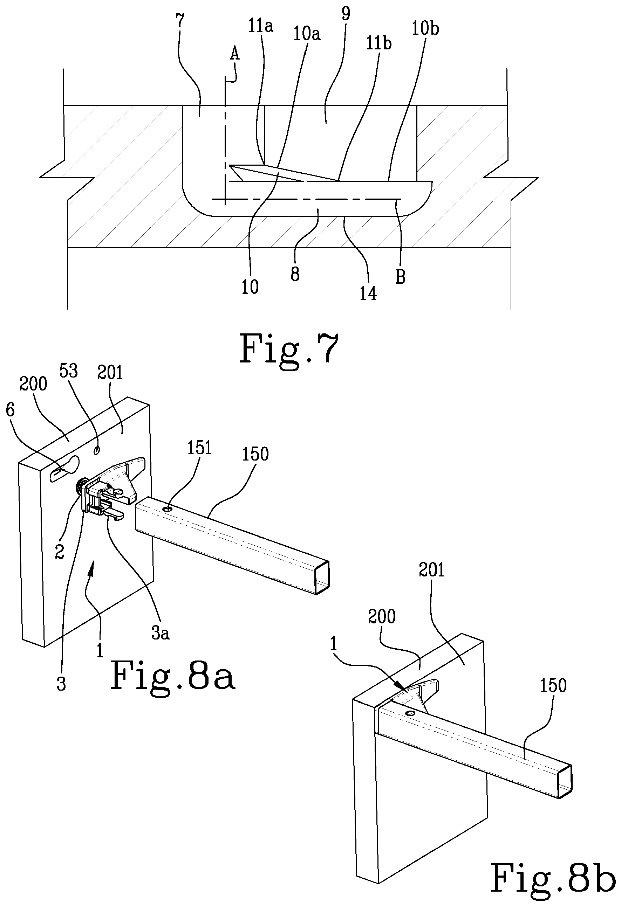

As already mentioned in the introductory portion of the text, this allows to expand the range of applications of the system, making it effective and safe also in single pin couplings, illustrated in an exemplary manner in the embodiments of figure 8a-8b in which the first component is a transverse bar 150.

According to the invention, the anti-sliding device 50 comprises a blocking element 52 connected to the base 3 of the pin 2 and shaped to engage in a hole 53 (or in the insertion portion 7 of the slot 6) of said second component 200 when the pin 2 is in the tightening position.

In other words, the blocking element 52 is configured to remain in an inactive (or resting) condition in all the positions of the pin 2 except the tightening position, at which the blocking element 52 engages in the hole 53 (or the insertion portion 7 of the slot 6) preventing the further sliding of the pin 2 in the tightening direction "B".

Therefore, the blocking element 52 comprises a protruding body next to the pin 2, which is protruding along a direction parallel or at least partially parallel to the insertion direction.

According to the invention, the blocking element 52 is defined by a tooth 52a protruding from the base 3 and provided with at least one abutment side orthogonal to the tightening direction "B" in order to prevent the movement of the pin 2 along said direction when the tooth 52a is engaged in said hole 53 (or in said insertion portion 7 of the slot 6).

In order to facilitate the movement of the pin 2 and the blocking element 52, the anti-sliding device 50 comprises an elastically deformable bracket 51 (or flap) connecting the base 3 of the pin 2 and the blocking element 52 to one another.

Such a bracket 51 is therefore an elastic body preferably developing in a plane substantially parallel to the sliding direction "B" (more preferably parallel to the flat face 201) and elastically deformable in rotation/flexion around an axis lying in the development plane thereof.

In fact, preferably, the bracket 51 is configured to allow an oscillation of the blocking element 52, with respect to the pin 2, around an axis orthogonal to the insertion direction "A".

Thereby, following the insertion of the pin 2 into the slot 6, the bracket 51 is inflected, keeping the blocking element 52 pressed against the flat face 201 of the second component until the tightening position is reached by the pin 2, at which point the elastic return action of the bracket 51 pushes the blocking element 52 into the respective hole 53 (or into the insertion portion 7 of the slot 6, depending on the embodiment).

According to the invention, the second component 200 of the piece of furniture has an additional and flanked hole 53 with respect to the slot 6 and the blocking element 52 is shaped to engage in said hole 53.

Alternatively, however, the blocking element 52 could engage directly in the insertion portion 7 of the slot 6, avoiding the need for further perforations of the second component 200.

Preferably, the slot 6 defines therein a stroke of the pin 2 along the tightening direction "B" corresponding to a distance between a central axis of the insertion portion 7 (i.e., the insertion direction "A") and the main direction of the pin 2 in the tightening position "B". Such a stroke is considered an interaxis of the slot 6.

Preferably, the central direction of the pin 2 (i.e., the stem 4) is located at a distance from a central axis of the blocking element 52 which is greater than to said stroke.

Preferably, however, in order to maximize the seal, the central main direction of the pin 2 is aligned with the central axis of the blocking element 52 along the tightening direction "B". In other words, with reference to the tightening direction "B", the blocking element 52 and the pin are aligned.

In such an embodiment, the insertion portion 7 of the slot 6 is interposed between said sliding portion 8 and said hole 53.

Thereby, the action counteracting the sliding of the pin 2 in the slot would be maximized, as it lacks any rotational component.

It should be noted that, for all the method steps below, where the illustrated features refer to structural features of the piece of furniture or of the connecting system 1 not according to the invention.

Preferably, therefore, the second component is a wooden panel, more preferably with a structure in chipboard, MDF or laminate.

The method not according to the invention, first includes arranging a component 200 of a piece of furniture having a flat face 201.

It is included to use a milling tool 70 provided with a cutting head 71 having a shaft 72 and an end portion 73 which is wider than said shaft 72 to define a shoulder 73a.

The dimensions of the cutting head 71 correspond to those of the pin 2 and the slot 6 described above, as will be clearer in the following.

In fact, the method according to the invention includes moving the milling tool 70 along a (predetermined) processing path to make a slot 6 in the flat face 201 of the component 200.

In particular, the processing path comprises at least a first "T1", a second "T2" and a third section "T3".

The first section "T1" is transverse, preferably orthogonal, to said flat face 201.

In said first section "T1" the milling tool 70 pierces the flat face 201 of the component 200 along a drilling axis "A" up to a first working position in which said end portion 73 is positioned at a first depth. The drilling axis "A" preferably corresponds to the insertion direction "A" described above.

Preferably, therefore, the first section "T1" is substantially a drilling section. It should be noted that in the first working position the milling tool 70 penetrates inside the component 200 with the end portion 73 and at least a part of the shaft 72.

The second section "T2" includes that the milling tool 70 moves to a second working position along a direction transverse to the first section "T1".

In this second working position, the end portion 73 of the cutting head 71 is misaligned with respect to said drilling axis "A" and placed at a second depth, greater than the first depth.

Preferably, the movement direction of the second section is inclined with respect to the drilling direction "A" of an angle such as to create, in the slot, an inclined surface with respect to the flat face 201; such an inclined surface preferably corresponds to the guide section 10a of the abutment shoulder 9 described above.

Said inclination is preferably comprised between 10° and 30°, more preferably about 15°.

Therefore, the second section "T2" is substantially straight, but it could be curved, preferably with concavity facing the flat face 201.

The third section "T3" is also transverse to the first section "T1". Along such a third section "T3" the milling tool 70 further translates to a third working position in which the end portion 73 is distal from the first working position with respect to the second working position.

In the third section "T3" the tool moves along a direction partly aligned with that of the second section "T2" along a direction corresponding to the tightening direction "B" described with reference to the connecting system 1.

Preferably, the third section "T3" is inclined with respect to the second section "T2", more preferably parallel to the flat face 201.

In fact, the third working position is offset from the second working position but is at the same second depth.

Preferably, moreover, the method includes moving the milling tool 70 along a fourth section "T4" in which said milling tool 70 moves from the third working position to a fourth working position.

In the fourth working position the end portion 73 of the cutting head 71 is aligned with said drilling axis "A" and is positioned at said second depth.

Advantageously, thereby, the section of the slot 6 is enlarged in correspondence with the insertion portion 7, facilitating the exit of the pin 2 referred to in the connecting system 1 during disassembly.

Advantageously, therefore, by virtue of the processing method not according to the invention it is possible to make a slot 6 having the technical and geometric features described above with reference to the connecting system 1.

In this regard, such a method can be used within the creation of a connecting system 1 not according to the invention, between two components of a piece of furniture of the type described above, in which the above steps are provided together with the creation of a pin 2 and the fixing of said pin 2 to a first component 100, 150.

The invention achieves the intended objects and offers important advantages.

In fact, the use of a sliding connecting system which has a guide section such as the one claimed makes the tightening of the coupling progressive, facilitating movements and giving a greater dimensional tolerance to the assembly.

Furthermore, the presence of an anti-sliding device greatly increases the reliability of the system, greatly expanding its scope of application.

## Claims

1. Connecting system between components of a piece of furniture, comprising:
- a pin (2) having
a base (3) that can be attached or integrated to a first component (100) of a piece of furniture,
a stem (4) departing from said base along an insertion direction (A) and
at least an enlarged portion (5) having a width greater than said stem (4);
- a slot (6) made in a second component (200) of a piece of furniture, developing along a tightening direction (B) transverse to said insertion direction (A) and sized to house inside said enlarged portion (5) of the pin (2), wherein the slot (6) has an insertion portion (7) equipped with an enlarged insertion section such as to allow the introduction of the enlarged portion (5) of the pin (2) in the slot (6) along said insertion direction (A) and a retaining portion (8), provided with at least one abutment shoulder (9) which extends along said tightening direction (B) and is shaped to prevent said enlarged portion (5) from coming out along the insertion direction (A); wherein said pin (2) can be inserted inside said slot (6) along said insertion direction (A) in correspondence with said insertion portion (7) and is movable inside the slot, along the tightening direction, towards a tightening position,
**characterized in that** it includes an anti-sliding device (50) configured to prevent the sliding of the pin (2) inside the slot (6) when it is in the tightening position and comprising:
- a blocking element (52) connected to said base (3) of the pin (2) and protruding next to said pin (2); said blocking element (52) being shaped to engage in a hole (53) or in the insertion portion (7) of the slot (6) of said second component (200) when said pin is in the tightening position,
-- an elastically deformable bracket (51) which connects said base (3) of the pin (2) and said blocking element (52);
wherein said blocking element (52) is defined by a tooth (52a) protruding from the deformable bracket (51) and provided with at least one abutment side orthogonal to the tightening direction (B) in order to prevent the movement of the pin (2) when engaged in said hole or in said insertion portion (7) of the slot (6).

2. Connecting system according to claim 1, wherein said elastically deformable bracket (51) is configured to allow oscillation of the blocking element (52), with respect to the pin (2), around an axis orthogonal to the direction of insertion (A).

3. Connecting system according to claim 1 or 2, wherein a central axis of the pin (2) is aligned with a central axis of the blocking element (52) along the tightening direction (B).

4. Connecting system according to any one of claims 1 to 3, wherein said slot (6) internally defines a stroke of the pin (2) along the tightening direction (B) corresponding to a distance between an axis central of the insertion portion (7) and a central axis of the pin (2) in the tightening position; said central axis of the pin (2) being located at a distance from a central axis of the blocking element (52) greater than said stroke.

5. Connecting system according to claim 4, wherein said hole (53) made in the second component (200) of the furniture is placed side by side with the slot (6); said blocking element (52) being shaped to engage in said hole (53).

6. Connecting system according to claim 5, wherein said hole (53) is aligned with the slot along the tightening direction (B), wherein said insertion portion (7) of the slot (6) is interposed between said portion of sliding (8) and said hole (53).

7. Piece of furniture, comprising:
- a first component (100);
- a second component (200) having a flat face (201);
**characterized in that** it comprises a connecting system between said first (100) and said second component (200) having the characteristics of any one of the preceding claims, wherein said pin (2) is fixed to said first component (100), said slot it is made of said second component (200) and the enlarged portion of the pin (2) is placed in the slot (6) in correspondence with the tightening position.

## Patentansprüche

1. Verbindungssystem zwischen Komponenten eines Möbels, umfassend:
- einen Zapfen (2) mit
einer Basis (3), die an einer ersten Komponente (100) eines Möbelstücks befestigt oder in diese integriert werden kann,
einem Schaft (4), der von der genannten Basis entlang einer Einführrichtung (A) ausgeht, und
mindestens einem verbreiterten Abschnitt (5) mit einer Breite, die größer ist als der genannte Schaft (4);
- einen Schlitz (6), der in einer zweiten Komponente (200) eines Möbelstücks ausgebildet ist und sich entlang einer Spannrichtung (B) quer zu der genannten Einführrichtung (A) erstreckt und so bemessen ist, dass er den genannten verbreiterten Abschnitt (5) des Zapfens (2) in seinem Inneren aufnimmt, wobei der Schlitz (6) einen Einführabschnitt (7) aufweist, der mit einem verbreiterten Einführquerschnitt ausgestattet ist, um das Einführen des verbreiterten Abschnitts (5) des Zapfens (2) in den Schlitz (6) entlang der genannten Einführrichtung (A) zu ermöglichen, sowie einen Halteabschnitt (8), der mit mindestens einer Anschlagschulter (9) versehen ist, die sich entlang der genannten Spannrichtung (B) erstreckt und so geformt ist, dass sie verhindert, dass der genannte verbreiterte Abschnitt (5) entlang der Einführrichtung (A) herauskommt;
wobei der genannte Zapfen (2) entlang der genannten Einführrichtung (A) in Übereinstimmung mit dem genannten Einführabschnitt (7) in den genannten Schlitz (6) eingeführt werden kann und innerhalb des Schlitzes entlang der Spannrichtung in eine Spannposition bewegbar ist,
**dadurch gekennzeichnet, dass** es eine Gleitsicherungsvorrichtung (50) umfasst, die so konfiguriert ist, dass sie das Gleiten des Zapfens (2) innerhalb des Schlitzes (6) verhindert, wenn er sich in der Spannposition befindet, und umfassend:
- ein Sperrelement (52), das mit der genannten Basis (3) des Zapfens (2) verbunden ist und neben dem genannten Zapfen (2) hervorsteht; wobei das genannte Sperrelement (52) so geformt ist, dass es in eine Bohrung (53) oder in den Einführabschnitt (7) des Schlitzes (6) der genannten zweiten Komponente (200) eingreift, wenn sich der genannte Zapfen in der Spannposition befindet,
-- einen elastisch verformbaren Bügel (51), der die genannte Basis (3) des Zapfens (2) und das genannte Sperrelement (52) verbindet;
wobei das genannte Sperrelement (52) durch einen Zahn (52a) definiert ist, der von dem verformbaren Bügel (51) hervorsteht und mit mindestens einer Anschlagseite orthogonal zur Spannrichtung (B) versehen ist, um die Bewegung des Zapfens (2) zu verhindern, wenn er in die genannte Bohrung oder in den genannten Einführabschnitt (7) des Schlitzes (6) eingreift.

2. Verbindungssystem nach Anspruch 1, wobei der genannte elastisch verformbare Bügel (51) so konfiguriert ist, dass er eine Schwingung des Sperrelements (52) in Bezug auf den Zapfen (2) um eine Achse orthogonal zur Einführrichtung (A) ermöglicht.

3. Verbindungssystem nach Anspruch 1 oder 2, wobei eine Mittelachse des Zapfens (2) entlang der Spannrichtung (B) mit einer Mittelachse des Sperrelements (52) ausgerichtet ist.

4. Verbindungssystem nach einem der Ansprüche 1 bis 3, wobei der genannte Schlitz (6) intern einen Hub des Zapfens (2) entlang der Spannrichtung (B) definiert, der einem Abstand zwischen einer Mittelachse des Einführabschnitts (7) und einer Mittelachse des Zapfens (2) in der Spannposition entspricht; wobei sich die genannte Mittelachse des Zapfens (2) in einem Abstand von einer Mittelachse des Sperrelements (52) befindet, der größer ist als der genannte Hub.

5. Verbindungssystem nach Anspruch 4, wobei die genannte Bohrung (53), die in der zweiten Komponente (200) des Möbels ausgebildet ist, neben dem Schlitz (6) angeordnet ist; wobei das genannte Sperrelement (52) so geformt ist, dass es in die genannte Bohrung (53) eingreift.

6. Verbindungssystem nach Anspruch 5, wobei die genannte Bohrung (53) entlang der Spannrichtung (B) mit dem Schlitz ausgerichtet ist, wobei der genannte Einführabschnitt (7) des Schlitzes (6) zwischen dem genannten Gleitabschnitt (8) und der genannten Bohrung (53) angeordnet ist.

7. Möbelstück, umfassend:
- eine erste Komponente (100);
- eine zweite Komponente (200) mit einer ebenen Fläche (201);
**dadurch gekennzeichnet, dass** es ein Verbindungssystem zwischen der genannten ersten (100) und der genannten zweiten Komponente (200) umfasst, das die Merkmale eines der vorhergehenden Ansprüche aufweist, wobei der genannte Zapfen (2) an der genannten ersten Komponente (100) befestigt ist, der genannte Schlitz in der genannten zweiten Komponente (200) ausgebildet ist und der verbreiterte Abschnitt des Zapfens (2) in dem Schlitz (6) in Übereinstimmung mit der Spannposition angeordnet ist.

## Revendications

1. Système de jonction entre les composants d'un meuble, comprenant:
- une broche (2) comportant
une base (3) pouvant être fixée ou intégrée à un premier composant (100) d'un meuble,
une tige (4) partant de ladite base selon une direction d'insertion (A) et
au moins une portion élargie (5) présentant une largeur supérieure à celle de ladite tige (4);
- une fente (6) réalisée dans un deuxième composant (200) d'un meuble, se développant selon une direction de serrage (B) transversale à ladite direction d'insertion (A) et dimensionnée pour recevoir ladite portion élargie (5) de la broche (2), dans laquelle la fente (6) présente une portion d'insertion (7) équipée d'une section d'insertion élargie de manière à permettre l'introduction de la portion élargie (5) de la broche (2) dans la fente (6) selon ladite direction d'insertion (A) et une portion de retenue (8), pourvue d'au moins un épaulement de butée (9) qui s'étend selon ladite direction de serrage (B) et est configuré pour empêcher ladite portion élargie (5) de ressortir selon la direction d'insertion (A);
dans lequel ladite broche (2) peut être insérée à l'intérieur de ladite fente (6) selon ladite direction d'insertion (A) en correspondance avec ladite portion d'insertion (7) et est mobile à l'intérieur de la fente, selon la direction de serrage, vers une position de serrage,
**caractérisé en ce qu'**il comprend un dispositif anti-glissement (50) configuré pour empêcher le glissement de la broche (2) à l'intérieur de la fente (6) lorsqu'elle est en position de serrage et comprenant:
- un élément de blocage (52) relié à ladite base (3) de la broche (2) et faisant saillie à côté de ladite broche (2); ledit élément de blocage (52) étant conformé pour s'engager dans un trou (53) ou dans la portion d'insertion (7) de la fente (6) dudit deuxième composant (200) lorsque ladite broche est en position de serrage,
-- une patte élastiquement déformable (51) qui relie ladite base (3) de la broche (2) et ledit élément de blocage (52);
dans lequel ledit élément de blocage (52) est défini par une dent (52a) faisant saillie de la patte déformable (51) et pourvue d'au moins un côté de butée orthogonal à la direction de serrage (B) afin d'empêcher le mouvement de la broche (2) lorsqu'elle est engagée dans ledit trou ou dans ladite portion d'insertion (7) de la fente (6).

2. Système de jonction selon la revendication 1, dans lequel ladite patte élastiquement déformable (51) est configurée pour permettre l'oscillation de l'élément de blocage (52), par rapport à la broche (2), autour d'un axe orthogonal à la direction d'insertion (A).

3. Système de jonction selon la revendication 1 ou 2, dans lequel un axe central de la broche (2) est aligné avec un axe central de l'élément de blocage (52) selon la direction de serrage (B).

4. Système de jonction selon l'une quelconque des revendications 1 à 3, dans lequel ladite fente (6) définit intérieurement une course de la broche (2) selon la direction de serrage (B) correspondant à une distance entre un axe central de la portion d'insertion (7) et un axe central de la broche (2) en position de serrage; ledit axe central de la broche (2) étant situé à une distance d'un axe central de l'élément de blocage (52) supérieure à ladite course.

5. Système de jonction selon la revendication 4, dans lequel ledit trou (53) réalisé dans le deuxième composant (200) du meuble est placé à côté de la fente (6); ledit élément de blocage (52) étant conformé pour s'engager dans ledit trou (53).

6. Système de jonction selon la revendication 5, dans lequel ledit trou (53) est aligné avec la fente selon la direction de serrage (B), dans lequel ladite portion d'insertion (7) de la fente (6) est interposée entre ladite portion de glissement (8) et ledit trou (53).

7. Meuble, comprenant:
- un premier composant (100);
- un deuxième composant (200) présentant une face plane (201);
**caractérisé en ce qu'**il comprend un système de jonction entre ledit premier (100) et ledit deuxième composant (200) ayant les caractéristiques de l'une quelconque des revendications précédentes, dans lequel ladite broche (2) est fixée audit premier composant (100), ladite fente étant ménagée dans ledit deuxième composant (200) et la portion élargie de la broche (2) est placée dans la fente (6) en correspondance avec la position de serrage.
